# EUROPEAN PATENT SPECIFICATION

(11) **EP 1 810 605 B1**
(45) Date of publication and mention of the grant of the patent: **02.09.2009**
(21) Application number: 06425018.6
(22) Date of filing: 18.01.2006
(51) Int. Cl.: A47L 15/00, A47L 15/42

(54) **Washing method for dishwashing machines**
Waschprozess für Geschirrspülmaschinen
Procédé de lavage pour machine à laver la vaisselle

(43) Date of publication of application: 25.07.2007
(73) Proprietor: Candy S.p.A., 20052 Monza (MI) (IT)
(72) Inventor: Fumagalli, Silvano, 20052 Monza (MI) (IT)
(74) Representative: Simino, Massimo

(56) References cited:
- EP-A- 0 659 381
- EP-A- 0 829 220
- DE-A1- 1 428 364
- DE-A1- 19 845 338
- DE-A1- 19 951 839

## Description

The present invention relates to a washing method suitable for dishwashing machines, which comprises at least one cycle in which the electrical motor driving the pump for the circulation of the washing liquid is supplied with voltage pulses.

According to a known technique the pulsed supply to the electrical motor is effected for periods of time of predetermined fixed duration with the interposition of rest periods of predetermined duration having a value of the same order of magnitude as, although different from, that of the supply pulses.

Examples of this technique for pulsed supply to an electrical motor in order to drive the pump for the circulation of the washing liquid of a dishwashing machine are illustrated in DE 1 428 364, in EP 0 829 220 or in DE 199 51 839 A1.

According to another known type of technique, the pulsed electrical supply is one in which the duration of the voltage pulse at the motor is correlated with the time necessary for the washing liquid present in the collecting sump of the dishwashing machine to descend from the level it is at under static conditions to a level just above the suction mouth of the pump. On the other hand, the duration of the rest between one pulse and the next is as long as the time necessary for the washing liquid to descend from the tank to the collecting sump and assume the above-mentioned static level. An example of this technique is illustrated in EP 0 659 381.

In practice, it has been found that the various known techniques for pulsed supply to the motor of the pump for the circulation of the washing liquid, while giving rise to savings in energy, nevertheless have little or no effect on the reduction in the overall noise of the machine whose structure, from the point of view of acoustic insulation, must therefore remain unaltered, with the costs which that entails.

The object of the present invention is to provide a washing method, suitable for dishwashing machines, which comprises at least one cycle in which the electrical motor of the pump for the circulation of the washing liquid is operated using a method of a succession of voltage pulses which are repeated periodically at intervals of time, so as to achieve not only a saving in energy but also a considerable reduction in the overall noise generated by the motor and the pump which it drives.

A further object of the invention is to provide a washing method for dishwashing machines which, in a conventional machine for crockery and cutlery from 12-15 place settings, permits the use of a reduced amount of washing liquid compared with the amount conventionally required in machines having the same capacity.

Those and other objects, in accordance with the present invention, are achieved by the method having the features of claim 1.

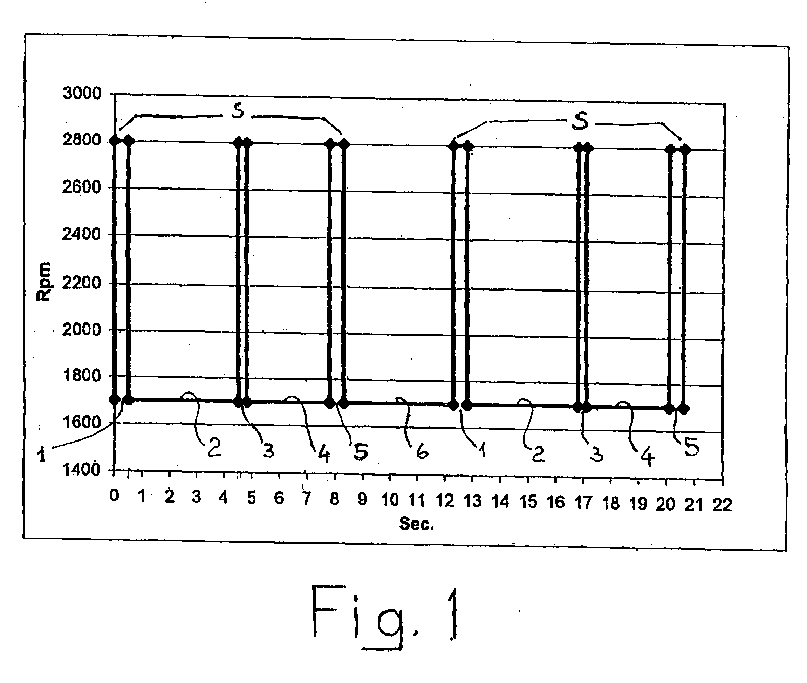

The features and advantages of the present invention will emerge more clearly from the detailed description of a practical embodiment illustrated by way of non-limiting example with reference to the graph given in the appended Figure 1 which illustrates the sequences of pulses applied to the electrical motor, the durations of each pulse and the durations of the time intervals between one pulse and the next.

With reference to Figure 1, it can be seen that the times, expressed in seconds, are entered on the axis of abscissas while the revolutions of the electrical motor driving the pump for the circulation of the machine's washing liquid are entered on the axis of ordinates.

The machine is a dishwashing machine with a capacity for containing crockery and cutlery for 12 - 15 place settings.

The graph illustrated represents the pattern of the electrical pulsed supply given to the electrical motor.

With reference to an initial time, in which it is considered that the motor is in inertial rotation at approximately 1,700 revolutions per minute (rpm), the supply voltage is applied for an initial period 1 of 0.5 seconds followed by an interval 2 of 4 seconds.

This interval is followed by a further intermediate pulse 3 lasting 0.3 seconds which is in turn followed by a time interval 4 of 3 seconds. At the end of this interval 4, a final pulse 5 lasting 0.5 seconds, which is equal to the duration of the initial pulse 1, is applied.

The initial 1, final 5 and intermediate 3 pulses with the associated intervals 2 and 4 make up a sequence of pulses which is generally indicated "S" and which is repeated with the same modalities at time intervals 6 whose duration is preferably 4 seconds which is equal to the duration of the interval 2, that is to say, the time interval between the initial pulse 1 and the intermediate pulse 3.

As can be seen from the graph of Figure 1, during the voltage pulses the revolutions per minute of the motor pass from approximately 1,700 rpm to approximately 2,800 rpm in order then to descend again to the value of approximately 1,700 rpm during the intervals between one pulse and the next.

With the above-described sequence of pulses with intervals, which is repeated continuously within the context of a washing cycle of a dishwashing machine of the conventional type mentioned above, a considerable reduction is observed in the average noise emitted by the machine during operation.

As a consequence of this reduction, the thickness of the covering material which, in a conventional manner, may be constituted by a layer of bitumen, can be reduced to 1.5 mm instead of the usual 4 mm for the same ambient noise which, in conventional machines, must be maintained at approximately 48 decibels.

A covering material in the context of the present invention means any material provided with sound-damping, sound-insulating, sound-absorbing and also heat-insulating properties.

In accordance with the pulsed supply sequence according to the invention, therefore, it is possible to obtain either the not inconsiderable economic advantage resulting from the reduction in the amount of covering material necessary to keep the noise emitted by the machine within the limits established for the corresponding commercial range of product or, for the same costs, a machine having enhanced quietness performance.

Moreover, in the first hypothesis the reduction in the amount of covering material also affords the advantage of a reduced environmental impact when the machine is disposed of at the end of its service life.

In addition, in accordance with the sequential pulsed supply according to the invention, the saving in terms of energy consumption achieved in the operation of the motor and the pump, which is found to be approximately 120 - 130 watts/hour, can advantageously be used in the same machine, increasing, for example, the efficiency of the stage of drying the crockery by bringing the associated temperature from the conventional 65°C to 70°C.

One of the chief advantages of the pulsed sequential cycle of the invention also resides in the increased washing efficiency.

For the height and intensity of the jets of washing liquid produced by the pump are subject to variation depending on the duration of the pulses with which the motor driving the pump is supplied and depending on the type of their sequence in time during the cycle.

Consequently, unlike the situation in conventional machines, the jets strike the crockery in various positions and with various intensities, producing an efficient washing result.

## Claims

1. A washing method suitable for dishwashing machines, which comprises at least one cycle in which the motor driving the pump for the washing liquid is supplied electrically with pulses of voltage, wherein the pulses are grouped in sequences (S) which are repeated periodically at predetermined time intervals (6), each sequence (S) comprising an initial pulse (1) and a final pulse (5) each having the same duration and being spaced from each other by an interval of predetermined duration, and further **characterized by** comprising also an intermediate pulse (3), which is active in said interval, having a duration shorter than that of the initial (1) and final (5) pulses.

2. A washing method according to claim 1, **characterized in that** the duration of the time interval (2) between the initial pulse (1) and said intermediate pulse (3) is greater than the duration of the time interval (4) between said intermediate pulse (3) and said final pulse (5) of the sequence (S).

3. A method according to claims 1 and 2, **characterized in that** the time intervals (6) with which said sequences (S) of pulses are repeated have a duration equal to that of the time interval (2) between said initial pulse (1) and said intermediate pulse (3).

4. A method according to claims 1 to 3, **characterized in that** the duration of the initial pulse (1) and of the final pulse (5) of the sequence (S) is equal to 0.5 seconds.

5. A method according to claims 1 to 4, **characterized in that** the duration of said intermediate pulse (3) is equal to 0.3 seconds.

6. A method according to claims 1 to 5, **characterized in that** the duration of the time interval (2) between said initial pulse (1) and said intermediate pulse (3) is equal to 4 seconds.

7. A method according to claims 1 to 6, **characterized in that** the duration of the time interval (4) between said intermediate pulse (3) and said final pulse (5) is equal to 3 seconds.

## Patentansprüche

1. Für Spülmaschinen geeignetes Waschverfahren, das zumindest einen Zyklus umfasst, worin der die Pumpe für die Waschflüssigkeit antreibende Motor Stromimpulse liefert, wobei die Impulse in Sequenzen (S) gruppiert sind, die periodisch zu vorbestimmten Zeitintervallen (6) wiederholt werden, wobei jede Sequenz (S) einen Initialimpuls (1) und einen Endimpuls (5) umfasst, die die gleiche Dauer haben und durch ein vorbestimmtes Intervall in regelmäßigen Abständen von einander getrennt sind, weiter **gekennzeichnet**, dass es einen in diesem Intervall aktiven Zwischenimpuls (3), dessen Dauer kürzer ist als der Anfangsimpuls (1) und der Endimpuls (5), umfasst.

2. Waschverfahren nach Anspruch 1, **dadurch gekennzeichnet, dass** die Dauer des Zeitintervalls (2) zwischen dem Initialimpuls (1) und dem Zwischen impuls (3) länger ist als die Dauer des Zeitintervalls (4) zwischen dem Zwischenimpuls (3) und dem Endimpuls (5) der Sequenz (S).

3. Verfahren nach den Ansprüchen 1 und 2, **dadurch gekennzeichnet, dass** die Zeitintervalle (6), mit denen die Sequenzen (S) der Impulse wiederholt werden, eine Dauer haben, die gleich derjenigen des Zeitintervalls (2) zwischen dem Initialimpuls (1) und dem Zwischenimpuls (3) ist.

4. Verfahren nach den Ansprüchen 1 bis 3, **dadurch gekennzeichnet, dass** die Dauer des Initialimpulses (1) und des Endimpulses (5) der Sequenz (S) 0,5 s ist.

5. Verfahren nach den Ansprüchen 1 bis 4, **dadurch gekennzeichnet, dass** die Dauer des Zwischenimpulses (3) 0,3 s ist.

6. Verfahren nach den Ansprüchen 1 bis 5, **dadurch gekennzeichnet, dass** die Dauer des Zeitintervalls (2) zwischen dem Initialimpuls (1) und dem Zwischenimpuls (3) 4 s ist.

7. Verfahren nach den Ansprüchen 1 bis 6, **dadurch gekennzeichnet, dass** die Dauer des Zeitintervalls (4) zwischen dem Zwischenimpuls (3) und dem Endimpuls (5) 3 s ist.

## Revendications

1. Un procédé de lavage pour machine à laver la vaisselle comportant au moins un cycle dans lequel le moteur qui commande la pompe du fluide de lavage est alimenté électriquement avec des impulsions de tension dans lequel les impulsions sont regroupées en séquences (S) qui sont périodiquement répétées selon un intervalle de temps prédéterminé (6) dans lequel chaque séquence (S) comporte une impulsion initiale (1) et une impulsion finale (5) ayant chacune la même duré et étant espacée l'une de l'autre d'un intervalle de temps prédéterminé, et ultérieurement **caractérisé en ce qu'**il comporte également une impulsion intermédiaire (3) qui est active pendant ledit intervalle, avec une durée plus courte que celle des impulsions initiales (1) et finales (2).

2. Un procédé de lavage selon la revendication 1, **caractérisé en ce que** la durée de l'intervalle de temps (2) entre l'impulsion initiale (1) et ladite impulsion intermédiaire (3) est supérieure à la durée de l'intervalle de temps (4) entre ladite impulsion intermédiaire (3) et ladite impulsion finale (5) de la séquence (S).

3. Une méthode selon les revendications 1 et 2, **caractérisée en ce que** les intervalles de temps (6) au sein desquels lesdites séquences (S) d'impulsion sont répétées ont une durée égale à celle de l'intervalle de temps (2) séparant ladite impulsion initiale (1) et ladite impulsion intermédiaire (3)

4. Une méthode selon les revendications 1 à 3, **caractérisée en ce que** la durée de l'impulsion initiale 1 et celle de l'impulsion finale (5) de la séquence (S) est égale à 0,5 secondes.

5. Une méthode selon les revendications 1 à 4, **caractérisée en ce que** la durée de ladite impulsion intermédiaire (3) est égale à 0,3 secondes.

6. Une méthode selon les revendications 1 à 5, **caractérisée en ce que** la durée de l'intervalle de temps (2) entre ladite impulsion initiale (1) et ladite impulsion intermédiaire (3) est égale à 4 secondes.

7. Une méthode selon les revendications 1 à 6, **caractérisée en ce que** la durée de l'intervalle de temps (4) entre ladite impulsion intermédiaire (3) et ladite impulsion finale (5) est égale à 3 secondes.
